(19) Europäisches Patentamt
European Patent Office
Office européen des brevets

(11) **EP 4 579 362 A1**

(12) **EUROPEAN PATENT APPLICATION**

(43) Date of publication:
**02.07.2025 Bulletin 2025/27**

(21) Application number: **24222926.8**

(22) Date of filing: **23.12.2024**

(51) International Patent Classification (IPC):
**G05B 19/18** *(2006.01)* **G05B 19/406** *(2006.01)*
**G05B 19/4065** *(2006.01)*

(52) Cooperative Patent Classification (CPC):
**G05B 19/406;** G05B 19/4065; G05B 2219/37234;
G05B 2219/37246; G05B 2219/37254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 JP 2023220526**

(71) Applicant: **BROTHER KOGYO KABUSHIKI
KAISHA**
**Nagoya-shi, Aichi 467-8561 (JP)**

(72) Inventor: **TERADA, Yuzuru**
**Nagoya-shi, Aichi, 467-8562 (JP)**

(74) Representative: **Prüfer & Partner mbB**
**Patentanwälte · Rechtsanwälte**
**Sohnckestraße 12**
**81479 München (DE)**

(54) **NUMERICAL CONTROL DEVICE, MACHINE TOOL, CONTROL METHOD, PROGRAM, AND STORAGE MEDIUM**

(57) A numerical control device (30) adapted to control a machine tool (1) that machines a workpiece using a tool, based on an NC program. The numerical control device (30) includes a reading portion (31), a first load acquisition portion (31), and a monitoring portion (31). The reading portion (31) is adapted to read, of commands (341, 340) of the NC program, a first command (341) and a second command (340). The first load acquisition portion (31) is adapted to acquire the machining load over a period from the reading of the first command (341) by the reading portion (31) to the reading of the second command (340) by the reading portion (31). The monitoring portion (31) is adapted to execute monitoring based on the machining load acquired by the first load acquisition portion (31).

FIG. 8

EP 4 579 362 A1

**Description**

**BACKGROUND ART**

The present invention relates to a numerical control device, a machine tool, a control method, a program, and a storage medium.

A detection device disclosed in Japanese Laid-Open Patent Publication No. 2021-64128 monitors a machining load of a tool. The detection device is provided with an actual machining load acquisition portion, and a detection portion. The actual machining load acquisition portion acquires, as the machining load, a load amount of the tool during execution of an idle feed operation and an actual machining operation. The idle feed operation is an operation mode in which the machining of a workpiece by the tool is not executed. The actual machining operation is an operation mode in which the machining of the workpiece by the tool is executed. During execution of the idle feed operation, the detection portion detects whether the machining load exceeds an idle feed threshold value. During execution of the actual machining operation, the detection portion detects whether the machining load exceeds an actual machining threshold value.

**SUMMARY OF INVENTION**

In the above-described detection device, a cutting feed of the tool is performed during the actual machining operation, but in a period of this cutting feed, there is a time delay before the tool comes into contact with the workpiece. In this case, during the period of the cutting feed in the actual machining operation, the detection device is unable to monitor the machining load while targeting only a period in which the tool is in contact with the workpiece.

An object of the present invention is to provide a numerical control device, a machine tool, a control method, a program, and a storage medium contribute to monitoring a machining load acquired during a desired period in machining of a workpiece.

A numerical control device according to a first aspect of the present invention, the numerical control device adapted to control a machine tool. The machine tool machines a workpiece using a tool, based on an NC program. The numerical control device includes a reading portion, a first load acquisition portion, and a monitoring portion. The reading portion is adapted to read, of commands of the NC program, a first command and a second command. The first command indicates an acquisition start timing of starting to acquire a machining load in the machining of the workpiece. The second command indicates an acquisition end timing of ending the acquisition of the machining load. The first load acquisition portion is adapted to acquire the machining load over a period from the reading of the first command by the reading portion to the reading of the second command by the reading portion. The monitoring portion is adapted to execute monitoring based on the machining load acquired by the first load acquisition portion.

The above-described numerical control device specifies the machining load acquisition start time and acquisition end time using the first command and the second command of the NC program. Thus, the numerical control device contributes to monitoring the acquired machining load over a desired period.

In the numerical control device, the numerical control device may include a second load acquisition portion and a storage control portion. The second load acquisition portion may be adapted to acquire a reference machining load being a reference for the monitoring, over the period from the reading of the first command by the reading portion to the reading of the second command by the reading portion. The storage control portion may be adapted to store the reference machining load acquired by the second load acquisition portion, into a storage device. The monitoring portion may monitor the machining load acquired by the first load acquisition portion, based on the reference machining load stored in the storage device. The numerical control device contributes to monitoring the machining load based on the reference machining load.

In the numerical control device, the numerical control device may include a first setting portion and a second setting portion. The first setting portion may be adapted to set, based on the reference machining load stored in the storage device, a monitoring start timing of starting monitoring of the machining load by the monitoring portion, within the period from the reading of the first command by the reading portion to the reading of the second command by the reading portion. The second setting portion may be adapted to set, based on the reference machining load stored in the storage device, a monitoring end timing of ending the monitoring of the machining load by the monitoring portion, within the period from the reading of the first command by the reading portion to the reading of the second command by the reading portion. The monitoring portion may monitor the machining load acquired by the first load acquisition portion over a period from the monitoring start timing set by the first setting portion to the monitoring end timing set by the second setting portion. Of the acquired machining load, the numerical control device contributes to monitoring the machining load targeting a period necessary for the monitoring from the monitoring start timing to the monitoring end timing.

In the numerical control device, the numerical control device may include a third setting portion and a fourth setting portion. The third setting portion may be adapted to set an upper limit load based on the reference machining load stored in the storage device. The fourth setting portion may be adapted to set a lower limit load based on the reference machining load stored in the storage device. The monitoring portion may monitor the machining load acquired by the first load acquisition portion, based on the upper limit load set by the third setting portion and the lower limit load set by the fourth setting portion. The numerical control device contributes to monitoring the machining load based on the upper limit load and the lower limit load that are based on the reference machining load.

In the numerical control device, the numerical control device may include a first notification control portion and a second notification control portion. The first notification control portion may be adapted to perform notification of an abnormality of the machining load, when the machining load acquired by the first load acquisition portion is determined to be greater than the upper limit load set by the third setting portion. The second notification control portion may be adapted to perform notification of an abnormality of the machining load, when the machining load acquired by the first load acquisition portion is determined to be lower than the lower limit load set by the fourth setting portion. The numerical control device contributes to the user's recognition of the abnormality of the machining load.

In the numerical control device, the numerical control device may include a third setting portion. The third setting portion may be adapted to set an upper limit load based on the reference machining load stored in the storage device. The monitoring portion may include a first notification control portion. The first notification control portion may be adapted to perform notification of an abnormality of the machining load, when the machining load acquired by the first load acquisition portion is determined to be greater than the upper limit load set by the third setting portion. The numerical control device contributes to the user's recognition of the abnormality of the machining load.

In the numerical control device, the numerical control device may include a fourth setting portion. The fourth setting portion may be adapted to set a lower limit load based on the reference machining load stored in the storage device. The monitoring portion may include a second notification control portion. The second notification control portion may be adapted to perform notification of an abnormality of the machining load, when the machining load acquired by the first load acquisition portion is determined to be lower than the lower limit load set by the fourth setting portion. The numerical control device contributes to the user's recognition of the abnormality of the machining load.

In the numerical control device, the numerical control device may include a display control portion. The display control portion may be adapted to display, on a display portion, the reference machining load stored in the storage device, the upper limit load set by the third setting portion, the lower limit load set by the fourth setting portion, and the machining load acquired by the first load acquisition portion to be overlaid with each other. The numerical control device contributes to the user's visual confirmation of the machining load.

In the numerical control device, the upper limit load may be obtained by adding an upper limit machining load, which is a predetermined offset amount, to the reference machining load. The lower limit load may be obtained by subtracting a lower limit machining load, which is a predetermined offset amount, from the reference machining load. The numerical control device may include a first correction portion and a second correction portion. The first correction portion may be adapted to correct the upper limit machining load, based on a change amount of the reference machining load with respect to a sampling period of the reference machining load. The second correction portion may be adapted to correct the lower limit machining load, based on the change amount. The third setting portion may set, as the upper limit load, a value obtained by adding the upper limit machining load, corrected by the first correction portion. The fourth setting portion may set, as the lower limit load, a value obtained by subtracting the lower limit machining load, corrected by the second correction portion, from the reference machining load. The numerical control device contributes to appropriately correcting the upper limit machining load and the lower limit machining load based on a magnitude of the change amount of the reference machining load.

In the numerical control device, the second load acquisition portion may acquire the reference machining load for each of the tools used in machining the workpiece based on the NC program. The storage control portion may store, into the storage device, the reference machining load acquired by the second load acquisition portion for each of the tools, in association with the corresponding tool. The first load acquisition portion may acquire the machining load when machining the workpiece using a specific tool that is one of the tools. The monitoring portion may monitor the machining load acquired by the first load acquisition portion, based on the reference machining load associated with the specific tool, of the reference machining loads stored in association with each of the tools by the storage control portion. The numerical control device contributes to monitoring the machining load based on the reference machining load associated with each of the tools.

In the numerical control device, the numerical control device may include a fifth setting portion and a sixth setting portion. The fifth setting portion may be adapted to set an upper limit value being a value of an upper limit of the machining load. The sixth setting portion may be adapted to set a lower limit value being a value of a lower limit of the machining load. The monitoring portion may monitor the machining load acquired by the first load acquisition portion, based on the upper limit value set by the fifth setting portion and the lower limit value set by the sixth setting portion. The numerical control device contributes to monitoring the machining load based on the upper limit value and the lower limit value.

In the numerical control device, the numerical control device may include a third notification control portion and a fourth notification control portion. The third notification control portion may be adapted to perform notification of an abnormality of the machining load, when the machining load acquired by the first load acquisition portion is determined to be greater than the upper limit value set by the fifth setting portion. The fourth notification control portion may be adapted to perform notification of an abnormality of the machining load, when the machining load acquired by the first load acquisition portion is determined to be lower than the lower limit value set by the sixth setting portion. The numerical control device contributes to the user's recognition of the abnormality of the machining load.

In the numerical control device, the numerical control device may include a fifth setting portion. The fifth setting portion may be adapted to set an upper limit value being an upper limit of the machining load. The monitoring portion may include a third notification control portion. The third notification control portion may be adapted to perform notification of an abnormality of the machining load, when the machining load acquired by the first load acquisition portion is determined to be greater than the upper limit value set by the fifth setting portion. The numerical control device contributes to the user's recognition of the abnormality of the machining load.

In the numerical control device, the numerical control device may include a sixth setting portion. The sixth setting portion may be adapted to set a lower limit value being a lower limit of the machining load. The monitoring portion may include a fourth notification control portion. The fourth notification control portion may be adapted to perform notification of an abnormality of the machining load, when the machining load acquired by the first load acquisition portion is determined to be lower than the lower limit value set by the sixth setting portion. The numerical control device contributes to the user's recognition of the abnormality of the machining load.

A machine tool according to a second aspect of the present invention, the machine tool machines a workpiece using a tool, based on an NC program. The machine tool includes a reading portion, a first load acquisition portion, and a monitoring portion. The reading portion is adapted to read, of commands of the NC program, a first command and a second command. The first command indicates an acquisition start timing of starting to acquire a machining load in the machining of the workpiece. The second command indicates an acquisition end timing of ending the acquisition of the machining load. The first load acquisition portion is adapted to acquire the machining load over a period from the reading of the first command by the reading portion to the reading of the second command by the reading portion. The monitoring portion is adapted to execute monitoring based on the machining load acquired by the first load acquisition portion.

The above-described machine tool achieves the same effects as the numerical control device according to the first aspect.

A control method according to a third aspect of the present invention, the control method of controlling a numerical control device adapted to control a machine tool. The machine tool machines a workpiece using a tool, based on an NC program. The control method includes processes. The processes include a reading processing of reading, of commands of the NC program, a first command and a second command. The first command indicates an acquisition start timing of starting to acquire a machining load in the machining of the workpiece. The second command indicates an acquisition end timing of ending the acquisition of the machining load. The processes include a first load acquisition processing of acquiring the machining load over a period from the reading of the first command by the reading processing to the reading of the second command by the reading processing. The processes include a monitoring processing of executing monitoring based on the machining load acquired by the first load acquisition processing.

The above-described control method achieves the same effects as the numerical control device according to the first aspect.

A program according to a fourth aspect of the present invention, the program is to be executed by a computer of a numerical control device. The numerical control device is adapted to control a machine tool. The machine tool machines a workpiece using a tool based on an NC program. The program when executed by the computer, causes the numerical control device to perform processes. The processes include a reading processing of reading, of commands of the NC program, a first command and a second command. The first command indicates an acquisition start timing of starting to acquire a machining load in the machining of the workpiece. The second command indicates an acquisition end timing of ending the acquisition of the machining load. The processes include a first load acquisition processing of acquiring the machining load over a period from the reading of the first command by the reading processing to the reading of the second command by the reading processing. The processes include a monitoring processing of executing monitoring based on the machining load acquired by the first load acquisition processing.

The above-described program achieves the same effects as the numerical control device according to first aspect.

A storage medium according to a fifth aspect of the present invention, the storage medium stores a program to be executed by a computer of a numerical control device. The numerical control device is adapted to control a machine tool. The machine tool machines a workpiece using a tool based on an NC program. The program, when executed by the computer, causes the numerical control device to perform processes. The processes include a reading processing of reading, of commands of the NC program, a first command and a second command. The first command indicates an acquisition start timing of starting to acquire a machining load in the machining of the workpiece. The second command indicates an acquisition end timing of ending the acquisition of the machining load. The processes include a first load acquisition processing of acquiring the machining load over a period from the reading of the first command by the reading processing to the reading of the second command by the reading processing. The processes include a monitoring processing of executing monitoring based on the machining load acquired by the first load acquisition processing.

The above-described storage medium achieves the same effects as the numerical control device according to first aspect.

**BRIEF DESCRIPTION OF DRAWINGS**

Embodiments will be described below in detail with reference to the accompanying drawings in which:

FIG. 1 is a front view of a machine tool 1;
FIG. 2 is a block diagram showing an electrical configuration of the machine tool 1;
FIG. 3 is a flowchart of sample machining processing;
FIG. 4 is a diagram showing an example of a code of an NC program;
FIG. 5 is a diagram showing a waveform of a machining load F and a reference machining load Fr;
FIG. 6 is a diagram showing an example of a code of the NC program;
FIG. 7 is diagram showing a waveform of the machining load F and the reference machining load Fr;
FIG. 8 is a flowchart of main processing;
FIG. 9 is a flowchart of absolute monitoring processing;
FIG. 10 is a flowchart of relative monitoring processing;
FIG. 11 is a diagram showing a change amount of the reference machining load Fr over a sampling time period;
FIG. 12 is diagram showing a relationship between a ante-correction upper limit load Fh and a ante-correction lower limit load Fl, and the reference machining load Fr; and
FIG. 13 is a diagram showing a relationship between the corrected upper limit load Fh and the corrected lower limit load Fl, and the reference machining load Fr.

**Description of Embodiments**

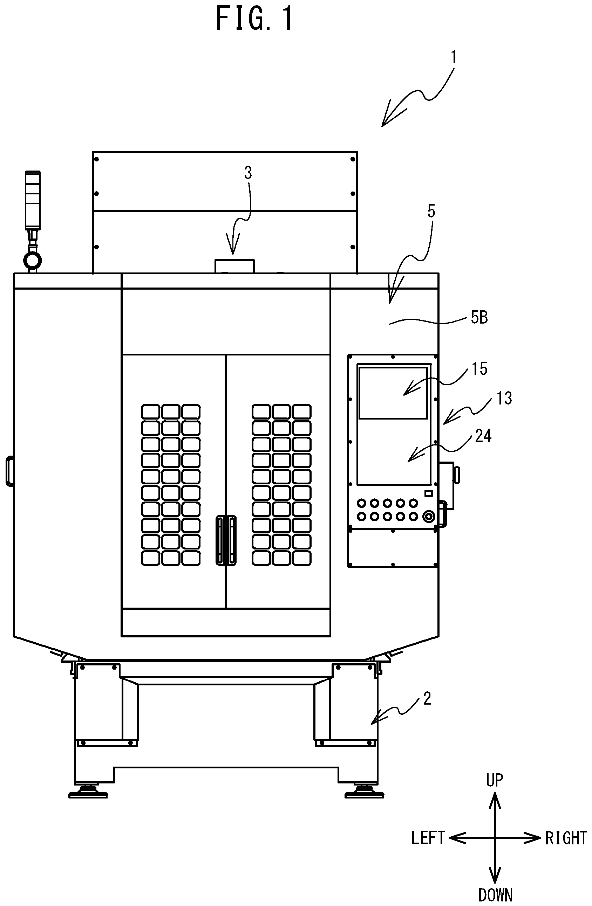

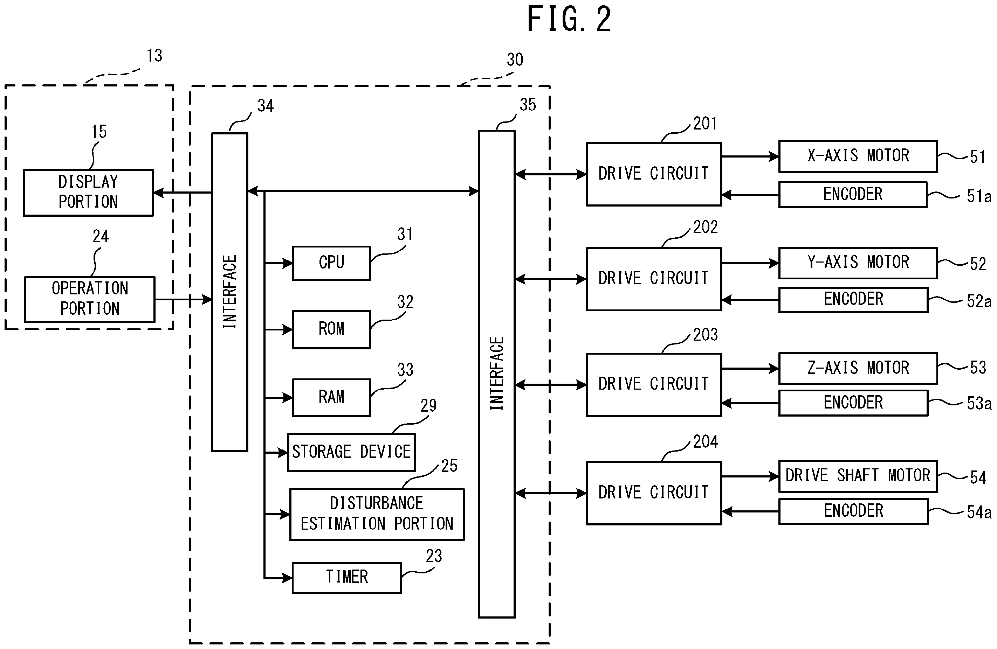

A machine tool 1 according to the present invention will be described with reference to FIG. 1 and FIG. 2. Hereinafter, the upper side, the lower side, the left side, the right side, the front side, and the depth side respectively define the upper side, the lower side, the left side, the right side, the front surface side, and the back surface side of the machine tool 1. The machine tool 1 shown in FIG. 1 is a machine that carries out cutting processing of a workpiece by rotating a tool.

The machine tool 1 shown in FIG. 1 and FIG. 2 is a vertical machine tool in which a drive shaft (not shown in the drawings) extends in a Z-axis direction. The machine tool 1 is provided with a base portion 2, a machine main body 3, and a cover 5. The base portion 2 is a base made of iron. The machine main body 3 is provided at the upper portion of the base portion 2. The machine main body 3 performs the cutting processing and the like of a workpiece (not shown in the drawings) fixed to an upper surface of a workbench (not shown in the drawings). The workbench is installed on the upper surface of the base portion 2. The cover 5 is fixed to the upper portion of the base portion 2, and surrounds the periphery of the machine main body 3. Operations of the machine tool 1 are controlled by a numerical control device 30 (refer to FIG. 2).

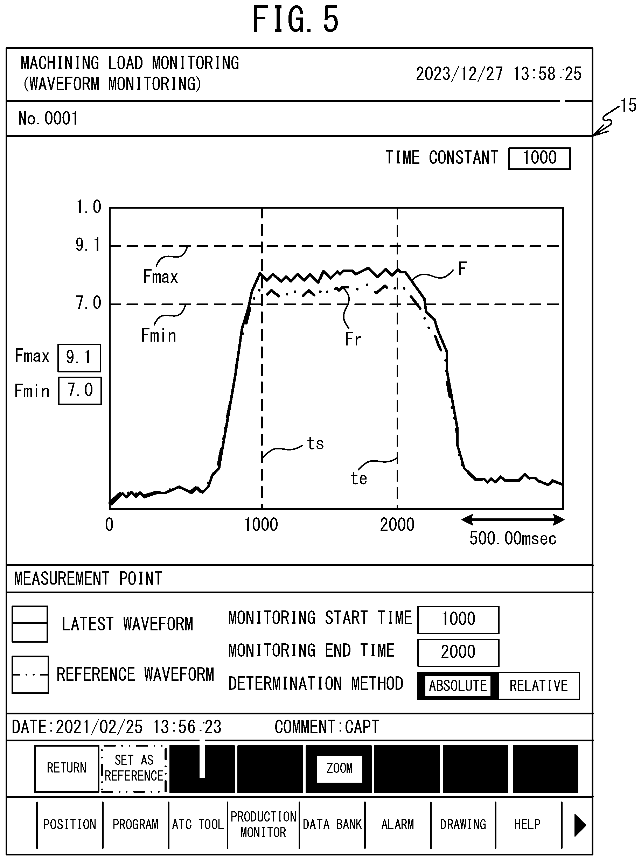

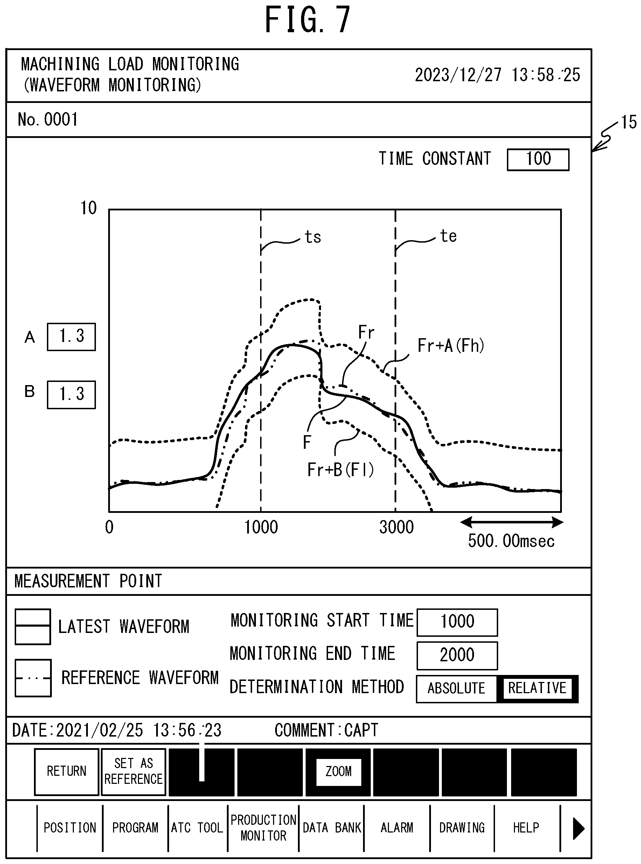

As shown in FIG. 1 and FIG. 2, the machine tool 1 is further provided with an operation panel 13. The operation panel 13 is provided at the right portion of a front surface of the cover 5. The operation panel 13 is provided with a display portion 15 and an operation portion 24. The display portion 15 displays various setting screens for selecting various programs, setting machining conditions of an NC (Numerical Control) program, and the like. Further, the display portion 15 displays a waveform of a machining load F to be described later (refer to FIG. 5 and FIG. 7).

The operation portion 24 is used by an operator to input settings for various operations and the like into the machine tool 1. The operator sets the various operations of the machine tool 1, machining conditions of the workpiece, and the like, by operating the operation portion 24 while checking the display portion 15. Using the operation portion 24, the operator selects and executes the NC program.

The electrical configuration of the machine tool 1 will be described with reference to FIG. 2. The machine tool 1 is provided with the numerical control device 30, the operation panel 13, drive circuits 201 to 204, an X-axis motor 51, a Y-axis motor 52, a Z-axis motor 53, a drive shaft motor 54, and the like. The numerical control device 30 is provided with a CPU 31, a ROM 32, a RAM 33, a timer 23, a storage device 29, a disturbance estimation portion 25, and interfaces 34 and 35.

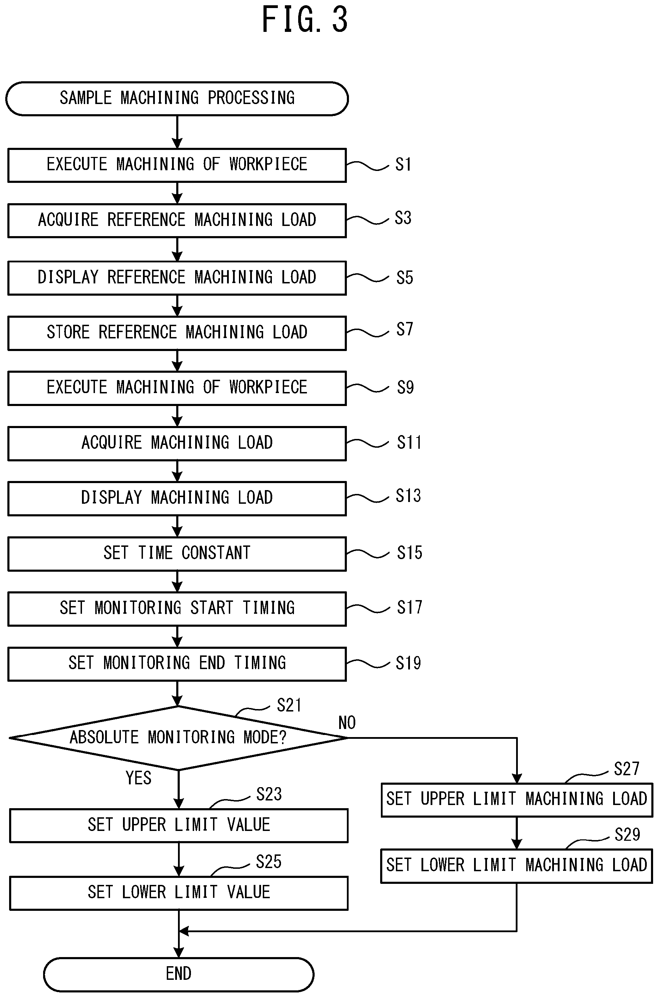

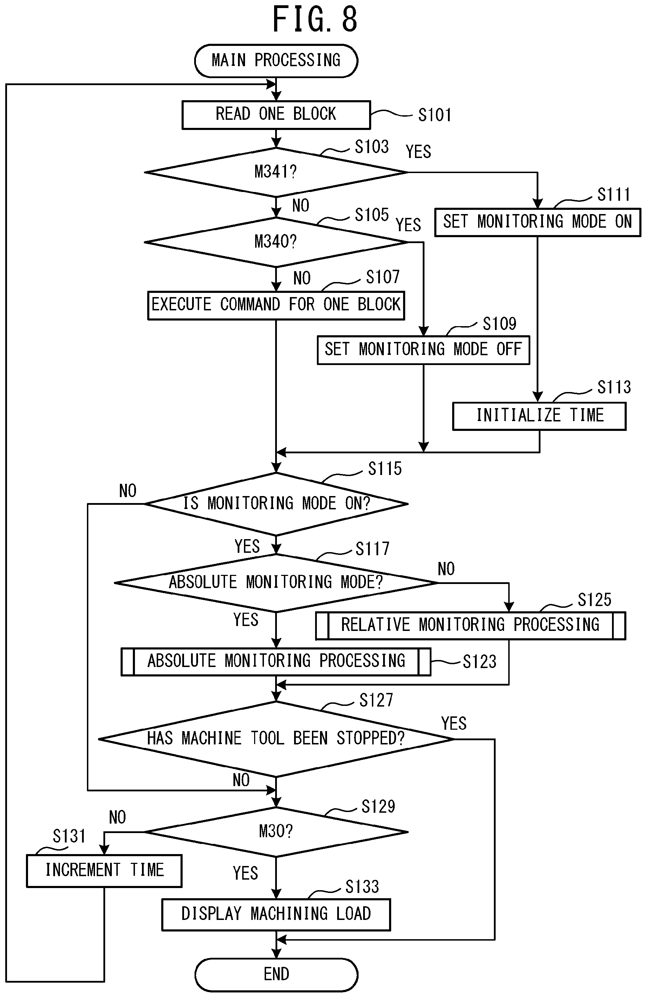

The CPU 31 performs overall control of the operations of the machine tool 1. The ROM 32 stores various programs, such as a sample machining program, a monitoring program, and the like. The sample machining program executes sample machining processing (refer to FIG. 3) to be described later. The monitoring program executes main processing (refer to FIG. 8) to be described later. The RAM 33 temporarily stores various data and the like.

The storage device 29 is non-volatile, and stores a plurality of the NC programs for cutting various workpieces. The NC program is a program executed in order to cut the workpiece. The storage device 29 further stores a reference machining load Fr to be described later. The machining conditions of the workpiece can be set in detail by operation of the operation panel 13 by the operator.

The disturbance estimation portion 25 estimates an estimated disturbance of the drive shaft motor 54, for example. It is sufficient that this estimation is performed using a known technique, and may be estimated from information relating to torque, inertia, angular acceleration, viscosity, velocity, friction, or the like, for example. The estimated disturbance of the drive shaft motor 54 will hereinafter be referred to as a "machining load F". Note that, a force acting on an X axis, a Y axis, or a Z axis of the workpiece, measured using a force sensor, may be used as the machining load F. Further, a torque around a drive shaft acting on the workpiece, measured using a torque sensor, may be used as the machining load F. Further, a vibration amplitude or vibrational work of vibrations in the X-axis direction, the Y- axis direction, or the Z-axis direction of the workpiece, or a vibration amplitude or vibrational work of vibrations in the X-axis direction, the Y-axis direction or the Z-axis direction of a drive shaft head, measured by an acceleration sensor, may be used as the machining load F. The timer 23 measures an elapsed time period from acquisition of the machining load F to an end of acquisition, for example.

The display portion 15 and the operation portion 24 are connected to the CPU 31 via the interface 34. The CPU 31 controls the drive circuits 201 to 204 via the interface 35. The drive circuits 201 to 204 respectively control the X-axis motor 51, the Y-axis motor 52, the Z-axis motor 53, the drive shaft motor 54, and the like. Each of encoders 51a to 54a detect positional information of rotation positions of the X-axis motor 51, the Y-axis motor 52, the Z-axis motor 53, and the drive shaft motor 54, respectively. Each of the drive circuits 201 to 204 transmit a detection result of the positional information and the like to the CPU 31 via the interface 35. The CPU 31 controls each of the drive circuits 201 to 204 based on the positional information, and performs the machining of the workpiece.

The sample machining processing will be described with reference to FIG. 3. The operator sets settings of the machine tool 1 to a sample machining operation. The operator attaches a tool to the drive shaft and sets the workpiece on a table. The operator selects and executes the NC program by operating the operation portion 24. The CPU 31 reads out the sample machining program stored in the ROM 32, and starts the sample machining processing. When the sample machining processing is started, the CPU 31 executes the machining of the workpiece based on the selected NC program (S1).

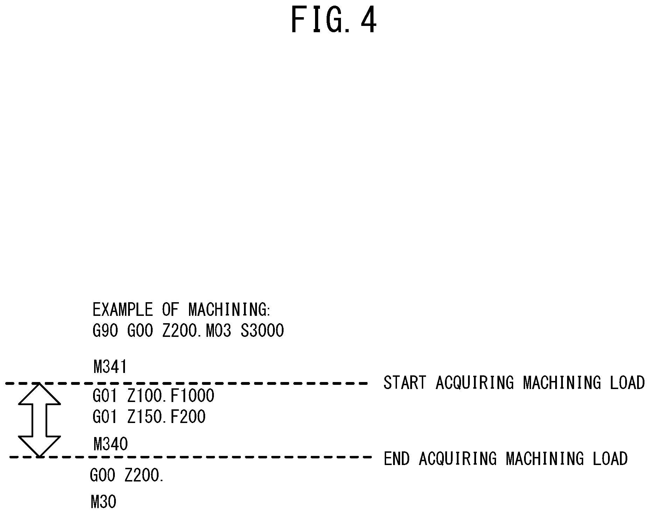

An example of the machining based on the NC program (refer to FIG. 4) will be described. For example, the CPU 31 executes the machining based on commands of each of codes shown in FIG. 4. The machining is screw hole drilling using a drill. A height of the workpiece is assumed to be a Z axis position of 145 mm, for example. The drive shaft moves, at a high speed feed, to a Z axis position of 200 mm, for example (refer to code G90 G00 Z200. M03 S3000). Further, the drive shaft executes a cutting feed from the Z axis height of 200 mm to a Z axis height of 100 mm (refer to code G01 Z100. F1000). Subsequently, the drive shaft rises from the Z axis position of 100 mm to 150 mm (refer to code G01 Z150. F2000). The drive shaft moves, at the high speed feed, from the Z axis position of 150 mm to the Z axis position of 200 mm (refer to code G00 Z200.).

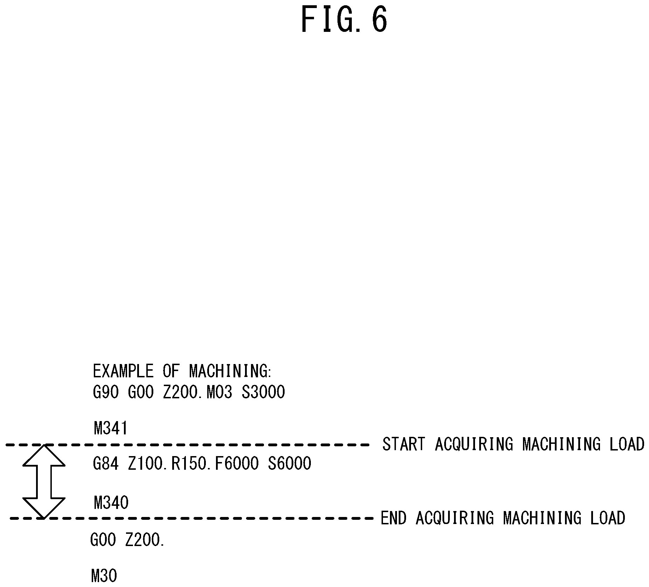

An example of the machining based on the NC program (refer to FIG. 6) will be described. For example, the CPU 31 executes the machining based on commands of each of codes shown in FIG. 6. The machining is tapping processing using a tap. The height of the workpiece is assumed to be the Z axis position of 145 mm, for example. The drive shaft moves, at the high speed feed, to the Z axis position of 200 mm, for example (refer to code G90 G00 Z200. M03 S3000). Further, the drive shaft executes the cutting feed from the Z axis height of 200 mm to the Z axis height of 100 mm, and the drive shaft rises from the Z axis position of 100 mm to 150 mm (refer to code G84 Z100. R150. F6000 S6000). The drive shaft moves, at the high speed feed, from the Z axis position of 150 mm to the Z axis position of 200 mm (refer to code G00 Z200.).

M codes will be described with reference to FIG. 4 and FIG. 6. The M codes include M341 and M340. M341 indicates an acquisition start timing of acquiring the machining load F in the processing of the workpiece. In other words, the CPU 31 starts to acquire the machining load F when M341 is read. M340 indicates an acquisition end timing of ending the acquisition of the machining load F. In other words, the CPU 31 ends the acquisition of the machining load F when the command of M340 is read. Thus, the operator can set an acquisition time period of the machining load F using the NC program. The example of the M codes shown in FIG. 4 and FIG. 6 target only a period in which the cutting feed of the workpiece is being executed.

The CPU 31 acquires the machining load F output from the disturbance estimation portion 25 as the reference machining load Fr (S3). An acquisition period of the reference machining load Fr is from reading the M 341 to reading the M 340. The reference machining load Fr is acquired over a predetermined sampling time period. The sampling time period may be set as appropriate. After acquisition of the reference machining load Fr is complete, the CPU 31 displays a waveform (refer to FIG. 5 and FIG. 7) of the acquired reference machining load Fr on the display portion 15 (S5). For example, the operator checks the waveform of the machining load F displayed on the display portion 15, and depresses a registration button ("SET AS REFERENCE") (refer to FIG. 5 and FIG. 7). In this way, the CPU 31 stores the reference machining load Fr in the storage device 29 (S7). The reference machining load Fr is stored in association with an NC program number of the NC program, the machining conditions of the workpiece (a type of the tool, a tool number), and the like, for example. The reference machining load Fr is a reference for monitoring the machining load F. The NC program number is identification information allocated in order to identify the NC program.

The operator removes the workpiece and sets a new workpiece on the table. The operator once more selects the NC program executed at S1. When the NC program is executed, the CPU 31 executes the processing of the workpiece (S9). The CPU 31 acquires the machining load F at the time of processing the workpiece, from the disturbance estimation portion 25 (S11). In a similar manner to S3, the acquisition period of the machining load F is the period from reading M341 to reading M340. The CPU 31 displays the acquired machining load F on the display portion 15 (S13). In this case, the display portion 15 displays the machining load F acquired at S11 so as to be overlaid on the reference machining load Fr (refer to FIG. 5 and FIG. 7).

The CPU 31 sets an LPF (Low Pass Filter) time constant (S15). The operator checks the waveform of the machining load F on the display portion 15, and adjusts the LPF time constant. By performing LPF processing, it is possible to adjust the waveforms of the machining load F and the reference machining load Fr to be smooth. Thus, by appropriately adjusting the LPF time constant, the CPU 31 can reduce an impact on monitoring caused by variations in the machining load F.

The CPU 31 sets a monitoring start timing ts (S17). The monitoring start timing ts is a timing at which monitoring of the machining load F is started, within the period from reading the M 341 to reading the M 340. The operator checks the reference machining load Fr and the machining load F on the display portion 15 and inputs a desired timing t into a "MONITORING START TIME" field (refer to FIG. 5 and FIG. 7). For example, the monitoring start timing ts is 1000 msec from the start of acquiring the machining load F (refer to FIG. 5 and FIG. 7).

The CPU 31 sets a monitoring end timing te (S19). The monitoring end timing te is a timing at which the monitoring of the machining load F ends, within the period from reading the M 341 to reading the M 340. The operator checks the reference machining load Fr and the machining load F on the display portion 15 and inputs a desired timing t into a "MONITORING END TIME" field (refer to FIG. 5 and FIG. 7). For example, the monitoring end timing te is 2000 msec from the start of acquiring the machining load F. For example, in FIG. 5, the operator can specify, of the cutting feed period, only a period in which the machining load F is stable.

The CPU 31 determines whether which of an absolute monitoring mode or a relative monitoring mode is set (S21). Each of the monitoring modes is an example of a method for monitoring the machining load F. The absolute monitoring mode is a suitable method when a change amount of the machining load F is small, for example. A case in which the change amount of the machining load F is small refers to a case of the waveform of the machining load F shown in FIG. 5, for example. On the other hand, the relative monitoring mode is a suitable method when the change amount of the machining load F is large, for example. A case in which the change amount of the machining load F is large refers to a case of the waveform of the machining load F shown in FIG. 7, for example. For example, the operator selects "ABSOLUTE" or "RELATIVE" for the "DETERMINATION METHOD" on the display portion 15 (refer to FIG. 5 and FIG. 7). "ABSOLUTE" corresponds to the absolute monitoring mode and "RELATIVE" corresponds to the relative monitoring mode.

When the monitoring mode is determined to be the absolute monitoring mode (yes at S21), the CPU 31 can set an upper limit value Fmax that is a value of an upper limit of the machining load F (S23). For example, the operator operates the operation panel 13 and sets the upper limit value Fmax of the display portion 15 to "9.1" (refer to FIG. 5). The CPU 31 can set a lower limit value Fmin that is a value of a lower limit of the machining load F (S25). For example, the operator operates the operation panel 13 and sets the lower limit value Fmin of the display portion 15 to "7.0" (refer to FIG. 5). These setting values are used in the absolute monitoring mode to be described later. The CPU 31 ends the sample machining processing.

On the other hand, when the monitoring mode is determined to be the relative monitoring mode (no at S21), the CPU 31 can set an upper limit machining load A (S27). The upper limit machining load A indicates an offset amount upward from the waveform of the reference machining load Fr (refer to FIG. 7). The CPU 31 can set a lower limit machining load B (S29). The lower limit machining load B indicates an offset amount downward from the waveform of the reference machining load Fr (refer to FIG. 7). The offset amounts of the upper limit machining load A and the lower limit machining load B may be the same as each other or may be different from each other. For example, the operator operates the operation portion 24 and sets the upper limit machining load A and the lower limit machining load B. These setting values are used in the relative monitoring mode to be described later. The CPU 31 ends the sample machining processing.

The operator executes the above-described sample machining processing for each of the NC programs. The workpiece machining conditions differ for each of the NC programs. Thus, for each of the machining conditions of the NC programs, the numerical control device 30 can acquire the reference machining load Fr for each of the tools used.

Main processing will be described with reference to FIG. 8. The operator sets the settings of the machine tool 1 to a monitoring operation. The operator selects and executes the NC program by operating the operation portion 24. The CPU 31 reads out the monitoring program stored in the ROM 32 and starts the main processing.

When the main processing is started, the CPU 31 reads one block of the NC program (S101). Of the commands of the NC program, the CPU 31 determines whether or not M341 indicating the acquisition start timing has been read (S103). When it is determined that it is not the timing of M341 indicating the acquisition start timing (no at S103), the CPU 31 determines whether or not M340 indicating the acquisition end timing has been read (S105). When it is determined that it is not the timing of M340 indicating the acquisition end timing (no at S105), the CPU 31 executes the command represented by the code of the one block (S 107). For example, the CPU 31 executes the high speed feed of the drive shaft.

The CPU 31 determines whether or not the monitoring mode has been set to ON (S115). When it is determined that the monitoring mode has been set to OFF (no at S115), the CPU 31 advances the processing to S129. Note that, in an initial setting, the monitoring mode setting is set to OFF.

On the other hand, when it is determined that M341 indicating the acquisition start timing has been read (yes at S103), the CPU 31 sets the monitoring mode to ON (S111). The CPU 31 initializes the timing t of the timer 23 to zero (S113). The CPU 31 advances the processing to S115.

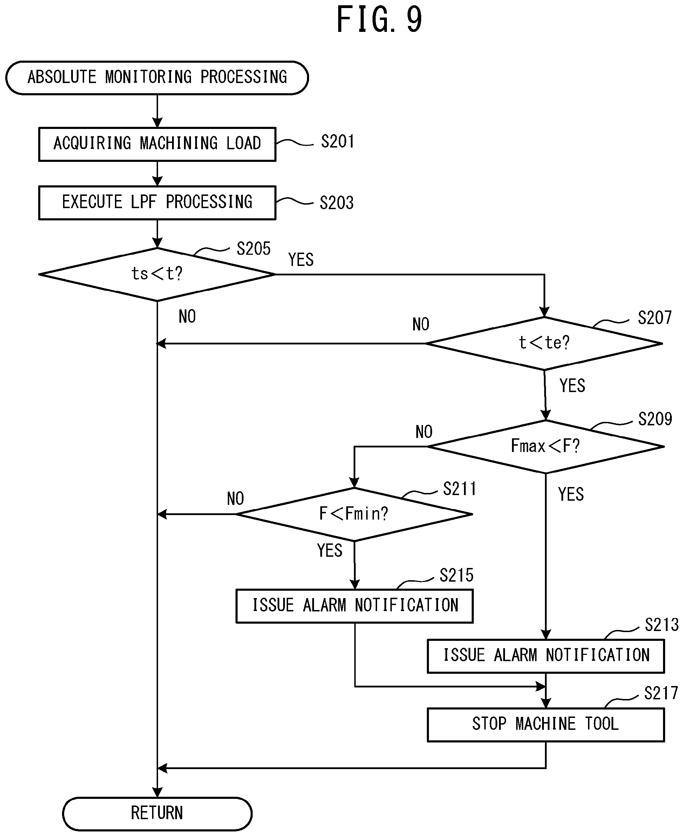

On the other hand, when the monitoring mode is set to ON (yes at S115), the CPU 31 determines whether or not the monitoring mode is the absolute monitoring mode (S117). When it is determined that the monitoring mode is the absolute monitoring mode (yes at S117), the CPU 31 executes absolute monitoring processing shown in FIG. 9 (S123).

When the absolute monitoring processing shown in FIG. 9 is executed, the CPU 31 acquires the machining load F from the disturbance estimation portion 25 (S201). The CPU 31 executes the LPF processing on the acquired machining load F, based on the time constant set in the sample machining processing (S203). The CPU 31 determines whether or not the timing t shown by the timer 23 has reached the monitoring start timing ts set in the sample machining processing (S205). When it is determined that the timing t shown by the timer 23 has not reached the monitoring start timing ts (no at S205), the CPU 31 ends the absolute monitoring processing and returns the processing to the main processing.

On the other hand, when it is determined that the timing t shown by the timer 23 has reached the monitoring start timing ts (yes at S205), the CPU 31 determines whether or not the timing t shown by the timer 23 has reached the monitoring end timing te (S207). When it is determined that the timing t shown by the timer 23 has not reached the monitoring end timing te (yes at S207), the CPU 31 determines whether or not the machining load F is greater than the upper limit value Fmax (S209).

When it is determined that the machining load F is equal to or less than the upper limit value Fmax (no at S209), the CPU 31 determines whether or not the machining load F is lower than the lower limit value Fmin (S211). When it is determined that the machining load F is equal to or greater than the lower limit value Fmin (no at S211), the CPU 31 judges that there is no abnormality in the machining load F, and returns the processing to the main processing.

On the other hand, when it is determined that the machining load F is greater than the upper limit value Fmax (yes at S209), namely, that an abnormality in the machining load F has been detected, the CPU 31 issues an alarm notification indicating that the machining load F has exceeded the upper limit value Fmax (S213). The alarm notification may be displayed on the display portion 15 as a character string, for example, indicating that "There is an abnormality in the machining load", or the like. Alternatively, the alarm notification may be performed by issuing a warning using a buzzer, or the like. The CPU 31 stops the driving of the machine tool 1 (S217). The CPU 31 ends the absolute monitoring processing, and returns the processing to the main processing.

On the other hand, when it is determined that the machining load F is lower than the lower limit value Fmin (yes at S211), namely, that an abnormality in the machining load F has been detected, the CPU 31 issues an alarm notification indicating that the machining load F has fallen below the lower limit value Fmin (S215). The alarm notification is executed in the same manner as when the machining load F has exceeded the upper limit value Fmax, for example. The CPU 31 stops the driving of the machine tool 1 (S217). The CPU 31 ends the absolute monitoring processing, and returns the processing to the main processing.

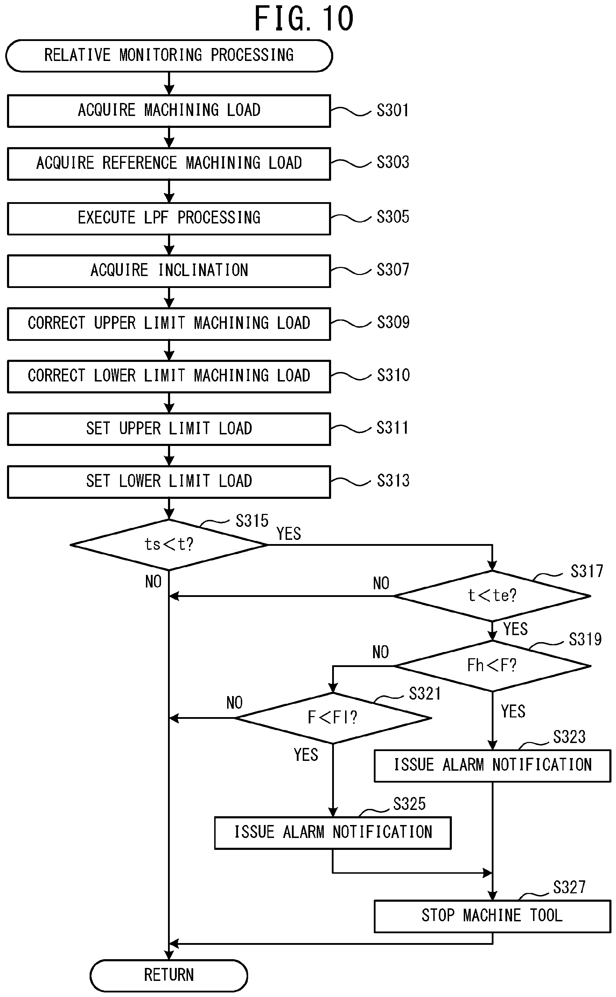

On the other hand, when it is determined, at S117 of the main processing, that the monitoring mode is the relative monitoring mode (no at S117), the CPU 31 executes relative monitoring processing shown in FIG. 10 (S125).

When the relative monitoring processing shown in FIG. 10 is executed, the CPU 31 acquires the machining load F from the disturbance estimation portion 25 (S301). The CPU 31 acquires the reference machining load Fr from the storage device 29 (S303). In this case, the CPU 31 acquires the reference machining load Fr acquired at the same timing as the timing t shown by the timer 23. The CPU 31 executes the LPF processing on the machining load F and the reference machining load Fr, using the time constant set in the sample machining processing (S305).

The CPU 31 refers to the following [Formula 1], and acquires an inclination $\alpha$ (S307). The CPU 31 calculates the inclination $\alpha$ per sec by dividing an absolute value of a difference between the reference machining load Fr at a timing t - 1 of a previous sampling and the reference machining load Fr at the timing t of a current sampling by a sampling time period.

$$\alpha = \; \mid Fr_t - Fr_{t-1} \mid \; \div \text{sampling time period} \qquad \text{[Formula 1]}$$

The CPU 31 corrects the upper limit machining load A set in the sample machining processing, based on the inclination $\alpha$ (S309). Here, the following [Formula 2] is used in the correction of the upper limit machining load A.

$$A' = \alpha \times tc \qquad \text{when } \alpha \times tc > A,$$
$$A \qquad \text{when } a \times tc \leq A \qquad \text{[Formula 2]}$$

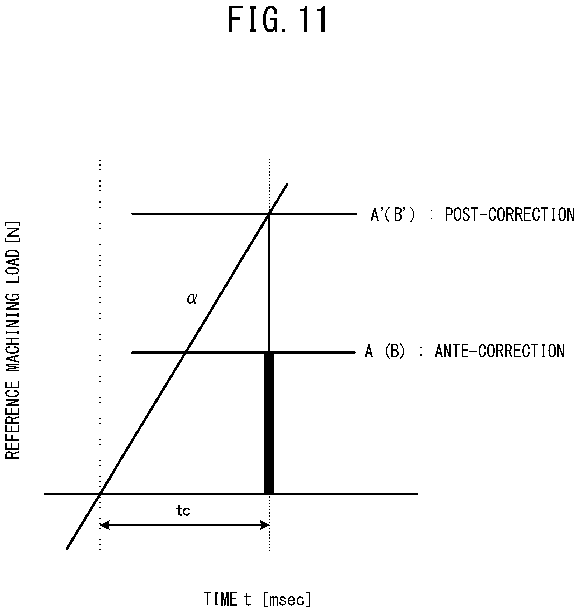

Here, A' is the corrected upper limit machining load. $\alpha$ is the inclination. tc is an allowed time for variations. The allowed time for variations tc is a parameter decided in accordance with variations in the machine tool 1, a processing target, the tool, and the like. Thus, when the inclination $\alpha$ is greater than A, the corrected upper limit machining load A' is comparatively large, and when the inclination $\alpha$ is equal to or less than A, the corrected upper limit machining load A' is the same as the ante-correction upper limit machining load A (refer to FIG. 11). In a similar manner, the CPU 31 corrects the lower limit machining load B (S310). The following [Formula 3] is used in the correction of the lower limit machining load B.

$$B' = \alpha \times tc \qquad \text{when } \alpha \times tc > B,$$
$$B \qquad \text{when } a \times tc \leq B \qquad \text{[Formula 3]}$$

Here, B' is the corrected lower limit machining load. $\alpha$ is the inclination. tc is the allowed time for variations.

The CPU 31 sets an upper limit load Fh (S311). In this case, in principle, the CPU 31 adds the corrected upper limit machining load A' to the reference machining load Fr (refer to FIG. 7). The value after the addition will be referred to as the "upper limit load Fh". The upper limit load Fh is a value based on the reference machining load Fr.

The CPU 31 sets a lower limit load Fl (S313). In this case, in principle, the CPU 31 subtracts the corrected lower limit machining load B' from the reference machining load Fr. The value after the subtraction will be referred to as the "lower limit load Fl". The lower limit load Fl is a value based on the reference machining load Fr.

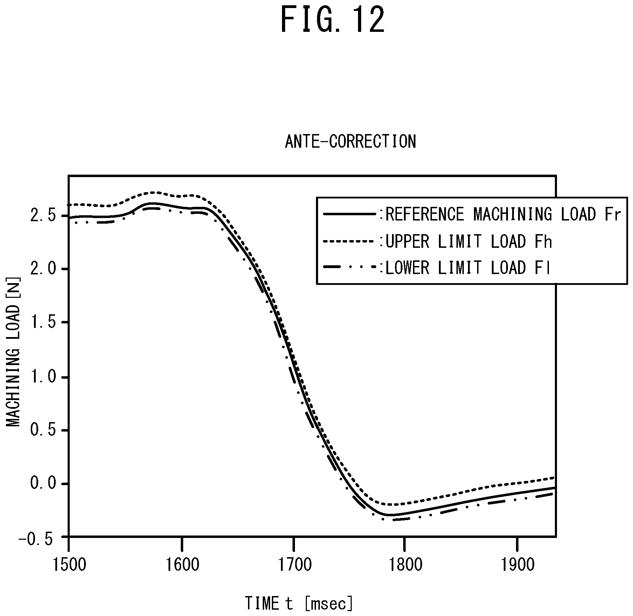

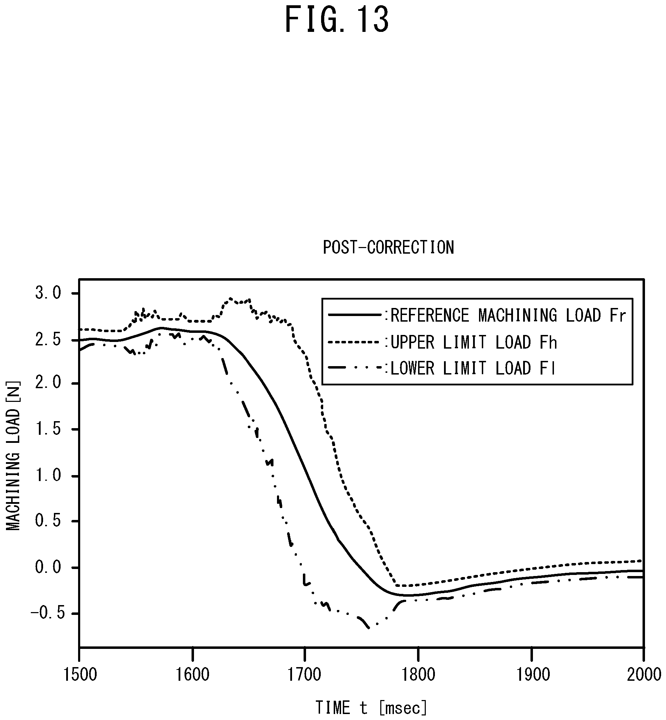

As shown in FIG. 12, when the upper limit machining load A and the lower limit machining load B are not corrected, distances between the reference machining load Fr, the upper limit load Fh, and the lower limit load Fl are in proximity. Thus, if the machining load F varies over a time axis due to variations in the machine tool 1 and the processing object, or in the tool and the like, it is easy for the CPU 31 to erroneously detect the abnormality. On the other hand, as shown in FIG. 13, when the upper limit machining load A and the lower limit machining load B are corrected, namely, when the corrected upper limit machining load A' and lower limit machining load B' are used, the distances of the upper limit load Fh and the lower limit load Fl with respect to the reference machining load Fr are separated to a greater extent. Thus, even if the machining load F varies over the time axis due to variations in the machine tool 1 and the processing object, or in the tool and the like, it is less likely that the CPU 31 may erroneously detect the abnormality. In this way, the correction does not impact a detection capability over a period in which fluctuations of the machining load F are small, and is effective for lessening the impact of variations in the machine tool 1 and the processing object, or in the tool and the like, over a period in which the fluctuations of the machining load F are large.

The CPU 31 determines whether or not the timing t shown by the timer 23 has reached the monitoring start timing ts (S315). When it is determined that the timing t shown by the timer 23 has not reached the monitoring start timing ts (no at S315), the CPU 31 ends the relative monitoring processing, and returns the processing to the main processing.

When it is determined that the timing t shown by the timer 23 has reached the monitoring start timing ts (yes at S315), the CPU 31 determines whether or not the timing t has reached the monitoring end timing te (S317). When it is determined that the timing t shown by the timer 23 has exceeded the monitoring end timing te (no at S317), the CPU 31 ends the relative monitoring processing, and returns the processing to the main processing.

On the other hand, when it is determined that the timing t shown by the timer 23 has not reached the monitoring end timing te (yes at S317), the CPU 31 determines whether or not the acquired machining load F is greater than the upper limit load Fh (S319). When it is determined that the machining load F is equal to or less than the upper limit load Fh (no at S319), the CPU 31 determines whether or not the machining load F is lower than the lower limit load Fl (S321). When it is determined that the machining load F is equal to or higher than the lower limit load Fl (no at S321), the CPU 31 ends the relative monitoring processing, and returns the processing to the main processing.

On the other hand, when it is determined that the machining load F is greater than the upper limit load Fh (yes at S319), namely, when the abnormality is occurring in the machining load F, in a similar manner to S213, the CPU 31 issues the alarm notification indicating that the machining load F is exceeding the upper limit load Fh (S323). The CPU 31 stops the driving of the machine tool 1 (S327). Further, when it is determined that the machining load F is lower than the lower limit load Fl (yes at S321), in a similar manner to S213, the CPU 31 issues the alarm notification indicating that the machining load F is lower than the lower limit load Fl (S325). The CPU 31 stops the driving of the machine tool 1 (S327). The CPU 31 ends the relative monitoring processing, and returns the processing to the main processing.

When the absolute monitoring processing or the relative monitoring processing has been ended, the CPU 31 determines whether or not the machine has been stopped (S127). When it is determined that the machine has been stopped (yes at S127), the CPU 31 ends the processing. When it is determined that the machine has not been stopped (no at S127), the CPU 31 advances the processing to S129.

At S129, it is determined whether or not the read code is M30 (S129). When it is determined that the read code is not M30 (no at S129), the CPU 31 increments the timing t shown by the timer 23 (S131). The CPU 31 returns the processing to S101.

In this way, the CPU 31 acquires the machining load F for each of the sampling time periods, from the monitoring start timing ts to the monitoring end timing te. When it is determined that the M 340 indicating the acquisition end timing has been read (yes at S105), the monitoring mode is set to OFF (S109). The CPU 31 advances the processing to S115.

On the other hand, when it is determined that the read code is M30 (yes at S129), the CPU 31 displays the machining load F on the display portion 15 (S133). In the case of the absolute monitoring mode, only the machining load F of FIG. 5, is displayed on the display portion 15, for example. In the case of the relative monitoring mode, the display portion 15 displays the reference machining load Fr, the upper limit load Fh, and the lower limit load Fl to be overlaid on the machining load F, as shown in FIG. 7. Note that, in the case of the absolute monitoring mode, when the reference machining load Fr is present, the reference machining load Fr may be displayed so as to be overlaid on the machining load F.

As described above, of the commands of the NC program, the CPU 31 reads the M 341 indicating the acquisition start timing at which the acquisition of the machining load F in the processing of the workpiece is started, and reads the M 340 indicating the acquisition end timing at which the acquisition of the machining load F is ended. The CPU 31 acquires the machining load F over the period from reading the M 341 to reading the M 340. The CPU 31 executes the monitoring based on the acquired machining load F.

The above-described numerical control device 30 specifies the acquisition start time and the acquisition end time of the machining load F, using the M 341 and the M 340 of the NC program. Thus, the numerical control device 30 contributes to monitoring the acquired machining load F over a desired period.

The CPU 31 acquires the reference machining load Fr, which is the reference for the monitoring, over the period from reading the M 341 to reading the M 340. The CPU 31 stores the acquired reference machining load Fr, into the storage device 29. The CPU 31 monitors the acquired machining load F, based on the reference machining load Fr, t stored in the storage device 29. The numerical control device 30 contributes to monitoring the machining load F, based on the reference machining load Fr.

Based on the reference machining load Fr stored in the storage device 29, the CPU 31 sets the monitoring start timing ts that is start of the monitoring of the machining load F, within the period from reading the M 341 to reading the M 340. Based on the reference machining load Fr stored in the storage device 29, the CPU 31 sets the monitoring end timing te that is end of the monitoring of the machining load F, within the period from reading the M 341 to reading the M 340. The CPU 31 monitors the acquired machining load F from the set monitoring start timing ts to the set monitoring end timing te. Of the acquired machining load F, the numerical control device 30 contributes to monitoring the machining load F targeting a period necessary for the monitoring from the monitoring start timing ts to the monitoring end timing te.

The CPU 31 sets the upper limit load Fh based on the reference machining load Fr stored in the storage device 29. The CPU 31 sets the lower limit load Fl based on the reference machining load Fr stored in the storage device 29. The CPU 31 monitors the machining load F based on the set upper limit load Fh and the set lower limit load Fl. The numerical control device 30 contributes to monitoring the machining load F based on the upper limit load Fh and the lower limit load Fl that are based on the reference machining load Fr. The numerical control device 30 contributes to appropriately performing the monitoring, even when fluctuations in the reference machining load Fr are large, for example.

When it is determined that the acquired machining load F is greater than the set upper limit load Fh, the CPU 31 issues the notification of the abnormality of the machining load F. When it is determined that the acquired machining load F is lower than the set lower limit load Fl, the CPU 31 issues the notification of the abnormality of the machining load F. The numerical control device 30 contributes to the user's recognition of the abnormality of the machining load F.

The CPU 31 displays, on the display portion 15, the reference machining load Fr stored in the storage device 29, the set upper limit load Fh, the set lower limit load Fl, and the acquired machining load F so as to be overlaid with each other. The numerical control device 30 contributes the user's visual confirmation of the machining load F.

The upper limit load Fh is obtained by adding the upper limit machining load A, which is a predetermined offset amount, to the reference machining load Fr. The lower limit load Fl is obtained by subtracting the lower limit machining load B, which is a predetermined offset amount, from the reference machining load Fr. The CPU 31 corrects the set upper limit machining load A, based on the change amount of the reference machining load Fr with respect to the sampling period of the reference machining load Fr. The CPU 31 corrects the set lower limit machining load B based on the change amount. The numerical control device 30 contributes to appropriately correcting the upper limit machining load A and the lower limit machining load B based on the magnitude of the change amount of the reference machining load Fr.

The CPU 31 acquires the reference machining load Fr for each of the tools used in the machining of the workpiece based on the NC program. The CPU 31 stores, into the storage device 29, the reference machining load Fr acquired for each of the tools in association with each of the corresponding tools. The CPU 31 acquires the machining load F when the workpiece is machined using one of the tools. The CPU 31 monitors the acquired machining load F based on the reference machining load Fr associated with the current tool, of the reference machining loads Fr stored in association with each of the tools. The numerical control device 30 contributes to monitoring the machining load F based on the reference machining load Fr associated with each of the tools.

The CPU 31 sets the upper limit value Fmax that is the value of the upper limit of the machining load F. The CPU 31 sets the lower limit value Fmin that is the value of the lower limit of the machining load F. The CPU 31 monitors the machining load F based on the set upper limit value Fmax and the set lower limit value Fmin. The numerical control device 30 contributes to monitoring the machining load F based on the upper limit value Fmax and the lower limit value Fmin. The numerical control device 30 contributes to monitoring the machining load F targeting a stable period in which the fluctuations of the reference machining load Fr are small, for example.

When it is determined that the acquired machining load F is greater than the set upper limit value Fmax, the CPU 31 issues the notification of the abnormality of the machining load F. When it is determined that the acquired machining load F is lower than the set lower limit value Fmin, the CPU 31 issues the notification of the abnormality of the machining load F. The numerical control device 30 contributes to the user's recognition of the abnormality of the machining load F.

In the above description, the M 341 is an example of a first command of the present invention. The M 340 is an example of a second command of the present invention. The inclination $\alpha$ is an example of a change amount of the present invention. The CPU 31 that performs the processing at S101 is an example of a reading portion of the present invention. The CPU 31 that performs the processing at S201 and S301 is an example of a first load acquisition portion of the present invention. The CPU 31 that performs the processing at S209, S211, S319, and S321 is an example of a monitoring portion of the present invention. The CPU 31 that performs the processing at S3 is an example of a second load acquisition portion of the present invention. The CPU 31 that performs the processing at S7 is an example of a storage control portion of the present invention. The CPU 31 that performs the processing at S17 is an example of a first setting portion of the present invention. The CPU 31 that performs the processing at S19 is an example of a second setting portion of the present invention. The CPU 31 that performs the processing at S311 is an example of a third setting portion of the present invention. The CPU 31 that performs the processing at S313 is an example of a fourth setting portion of the present invention. The CPU 31 that performs the processing at S133 is an example of a display control portion of the present invention. The CPU 31 that performs the processing at S309 is an example of a first correction portion of the present invention. The CPU 31 that performs the processing at S310 is an example of a second correction portion of the present invention. The CPU 31 that performs the processing at S23 is an example of a fifth setting portion of the present invention. The CPU 31 that performs the processing at S25 is an example of a sixth setting portion of the present invention. The CPU 31 that performs the processing at S323 is an example of a first notification control portion of the present invention. The CPU 31 that performs the processing at S325 is an example of a second notification control portion of the present invention. The CPU 31 that performs the processing at S213 is an example of a third notification control portion of the present invention. The CPU 31 that performs the processing at S215 is an example of a fourth notification control portion of the present invention.

The present invention is not limited to the above-described embodiment. The machine tool 1 according to the above-described embodiment is a vertical machine tool whose drive shaft extends in the Z-axis direction, but the present invention can be applied to a horizontal machine tool whose drive shaft extends in the horizontal direction. Further, the machine tool 1 may be a table traverse type in which the table moves on an XY plane, or may be a column traverse type in which the drive shaft moves on the XY plane.

In the above-described embodiment, M341 and M340 of the machining program are read at the time of the cutting feed, but the configuration is not limited to this example. The operator may specify M341 and M340 as appropriate.

In the above-described embodiment, the monitoring start timing ts is 1000 msec, and the monitoring end timing te is 2000 msec or 3000 msec, but the configuration is not limited to this example. For example, the monitoring start timing ts may coincide with a timing t0, namely with the machining load acquisition start timing. It is sufficient that the monitoring start timing ts be set as appropriate in accordance with the reference machining load Fr. This also applied to the monitoring end timing te.

In the above-described embodiment, the reference machining load Fr is acquired one time, but the configuration is not limited to this example. The reference machining load Fr may be updated in accordance with circumstances.

In the above-described embodiment, in the absolute monitoring mode, the monitoring is performed using the upper limit value Fmax and the lower limit value Fmin, but the configuration is not limited to this example. For example, the monitoring may be performed using only one of the upper limit value Fmax and the lower limit value Fmin. For example, the CPU 31 may set only the upper limit value Fmax that is the value of the upper limit of the machining load F. When it is determined that the acquired machining load F is greater than the upper limit value Fmax, the CPU 31 may perform the notification of the abnormality of the machining load F. Alternatively, the CPU 31 may set only the lower limit value Fmin that is the value of the lower limit of the machining load F. When it is determined that the acquired machining load F is lower than the lower limit value Fmin, the CPU 31 may perform the notification of the abnormality of the machining load F. In this case also, the numerical control device 30 contributes to the user's recognition of the abnormality of the machining load F. Further, the monitoring of the machining load F may be performed by referring to a divergence between the reference machining load Fr and the machining load F.

In the above-described embodiment, in the relative monitoring mode, the upper limit machining load A and the lower limit machining load B are corrected using the inclination $\alpha$, but need not necessarily be corrected. It is sufficient to set the monitoring start timing ts and the monitoring end timing te as appropriate in order to exclude locations at which the inclination $\alpha$ is steep.

In the above-described embodiment, in the relative monitoring mode, the upper limit load Fh and the lower limit load Fl are compared, but the configuration is not limited to this example. For example, the monitoring may be performed using only one of the upper limit load Fh and the lower limit load Fl. For example, the CPU 31 may set only the upper limit load Fh based on the reference machining load Fr stored in the storage device 29. When it is determined that the acquired machining load F is greater than the set upper limit load Fh, the CPU 31 may perform the notification of the abnormality of the machining load F. On the other hand, the CPU 31 may set only the lower limit load Fl based on the reference machining load Fr stored in the storage device 29. When it is determined that the acquired machining load F is lower than the set lower limit load Fl, the CPU 31 may perform the notification of the abnormality of the machining load F. In this case also, the numerical control device 30 contributes to the user's recognition of the abnormality of the machining load F. Further, the monitoring of the machining load F may be performed by referring to a divergence between the reference machining load Fr and the machining load F. For example, as comparison values, the change amount of the reference machining load Fr per sampling time, and the change amount of the machining load F may be compared.

In the above-described embodiment, in the relative monitoring mode, the upper limit load Fh is calculated by adding the upper limit machining load A, which is the predetermined offset amount, to the reference machining load Fr, and the lower limit load Fl is calculated by subtracting the lower limit machining load B, which is the predetermined offset amount, from the reference machining load Fr. However, the configuration is not limited to this example. For example, the upper limit load Fh may be calculated by multiplying the reference machining load Fr by Ar, which is a predetermined coefficient. Further, the lower limit load Fl may be calculated by multiplying the reference machining load Fr by Br, which is a predetermined coefficient.

In the above-described embodiment, in the relative monitoring mode, the reference machining load Fr, the upper limit load Fh, the lower limit load Fl, and the machining load F are displayed so as to be overlaid on each other, but the configuration is not limited to this example. For example, it is sufficient to display at least one element among the reference machining load Fr, the upper limit load Fh, the lower limit load Fl, and the machining load F. The operator may set the displayed waveform as appropriate.

In the above-described embodiment, the reference machining load Fr is stored in the storage device 29 without performing the LPF processing, but the configuration is not limited to this example. The reference machining load Fr may be stored after performing the LPF processing with respect thereto. In this case, it is sufficient to perform the monitoring after performing the LPF processing using the same time constant with respect to the acquired machining load F also.

**Claims**

1. A numerical control device (30) adapted to control a machine tool (1) that machines a workpiece using a tool, based on an NC program, the numerical control device (30) comprising:

   a reading portion (31) adapted to read, of commands (341, 340) of the NC program, a first command (341) and a second command (340), the first command (341) indicating an acquisition start timing of starting to acquire a machining load in the machining of the workpiece, and the second command (340) indicating an acquisition end timing of ending the acquisition of the machining load;
   a first load acquisition portion (31) adapted to acquire the machining load over a period from the reading of the first command (341) by the reading portion (31) to the reading of the second command (340) by the reading portion (31); and
   a monitoring portion (31) adapted to execute monitoring based on the machining load acquired by the first load acquisition portion (31).

2. The numerical control device (30) according to claim 1, further comprising:

   a second load acquisition portion (31) adapted to acquire a reference machining load being a reference for the monitoring, over the period from the reading of the first command (341) by the reading portion (31) to the reading of the second command (340) by the reading portion (31); and
   a storage control portion (31) adapted to store the reference machining load, acquired by the second load acquisition portion (31), into a storage device (29), wherein
   the monitoring portion (31) monitors the machining load acquired by the first load acquisition portion (31), based on the reference machining load stored in the storage device (29).

3. The numerical control device (30) according to claim 2, further comprising:

   a first setting portion (31) adapted to set, based on the reference machining load stored in the storage device (29), a monitoring start timing of starting monitoring of the machining load by the monitoring portion (31), within the period from the reading of the first command (341) by the reading portion (31) to the reading of the second command (340) by the reading portion (31); and
a second setting portion (31) adapted to set, based on the reference machining load stored in the storage device (29), a monitoring end timing of ending the monitoring of the machining load by the monitoring portion (31), within the period from the reading of the first command (341) by the reading portion (31) to the reading of the second command (340) by the reading portion (31), wherein
the monitoring portion (31) monitors the machining load acquired by the first load acquisition portion (31) over a period from the monitoring start timing set by the first setting portion (31) to the monitoring end timing set by the second setting portion (31).

4. The numerical control device (30) according to claim 2, further comprising:

a third setting portion (31) adapted to set an upper limit load based on the reference machining load stored in the storage device (29); and
a fourth setting portion (31) adapted to set a lower limit load based on the reference machining load stored in the storage device (29), wherein
the monitoring portion (31) monitors the machining load acquired by the first load acquisition portion (31), based on the upper limit load set by the third setting portion (31) and the lower limit load set by the fourth setting portion (31).

5. The numerical control device (30) according to claim 4, wherein
the monitoring portion (31) includes

a first notification control portion (31) adapted to perform notification of an abnormality of the machining load, when the machining load acquired by the first load acquisition portion (31) is determined to be greater than the upper limit load set by the third setting portion (31), and
a second notification control portion (31) adapted to perform notification of an abnormality of the machining load, when the machining load acquired by the first load acquisition portion (31) is determined to be lower than the lower limit load set by the fourth setting portion (31).

6. The numerical control device (30) according to claim 2, further comprising:

a third setting portion (31) adapted to set an upper limit load based on the reference machining load stored in the storage device (29), wherein
the monitoring portion (31) includes

a first notification control portion (31) adapted to perform notification of an abnormality of the machining load, when the machining load acquired by the first load acquisition portion (31) is determined to be greater than the upper limit load set by the third setting portion (31).

7. The numerical control device (30) according to claim 2, further comprising:

a fourth setting portion (31) adapted to set a lower limit load based on the reference machining load stored in the storage device (29), wherein
the monitoring portion (31) includes

a second notification control portion (31) adapted to perform notification of an abnormality of the machining load, when the machining load acquired by the first load acquisition portion (31) is determined to be lower than the lower limit load set by the fourth setting portion (31).

8. The numerical control device (30) according to claim 4, further comprising:
a display control portion (31) adapted to display, on a display portion (15), the reference machining load stored in the storage device (29), the upper limit load set by the third setting portion (31), the lower limit load set by the fourth setting portion (31), and the machining load acquired by the first load acquisition portion (31) to be overlaid with each other.

9. The numerical control device (30) according to claim 4, wherein

the upper limit load is obtained by adding an upper limit machining load, which is a predetermined offset amount, to the reference machining load, and
the lower limit load is obtained by subtracting a lower limit machining load, which is a predetermined offset amount, from the reference machining load, and
the numerical control device (30) further comprises:

a first correction portion (31) adapted to correct the upper limit machining load, based on a change amount of the reference machining load with respect to a sampling period of the reference machining load; and
a second correction portion (31) adapted to correct the lower limit machining load, based on the change amount, wherein
the third setting portion (31) sets, as the upper limit load, a value obtained by adding the upper limit machining load, corrected by the first correction portion (31), to the reference machining load, and
the fourth setting portion (31) sets, as the lower limit load, a value obtained by subtracting the lower limit machining load, corrected by the second correction portion (31), from the reference machining load.

10. The numerical control device (30) according to claim 2, wherein

the second load acquisition portion (31) acquires the reference machining load for each of the tools used in machining the workpiece based on the NC program,
the storage control portion (31) stores, into the storage device (29), the reference machining load acquired by the second load acquisition portion (31) for each of the tools, in association with the corresponding tool,
the first load acquisition portion (31) acquires the machining load when machining the workpiece using a specific tool that is one of the tools, and
the monitoring portion (31) monitors the machining load acquired by the first load acquisition portion (31), based on the reference machining load associated with the specific tool, of the reference machining loads stored in association with each of the tools by the storage control portion (31).

11. The numerical control device (30) according to either one of claims 1 and 3, further comprising:

a fifth setting portion (31) adapted to set an upper limit value being a value of an upper limit of the machining load; and
a sixth setting portion (31) adapted to set a lower limit value being a value of a lower limit of the machining load, wherein
the monitoring portion (31) monitors the machining load acquired by the first load acquisition portion (31), based on the upper limit value set by the fifth setting portion (31) and the lower limit value set by the sixth setting portion (31).

12. The numerical control device (30) according to claim 11, wherein
the monitoring portion (31) includes

a third notification control portion (31) adapted to perform notification of an abnormality of the machining load, when the machining load acquired by the first load acquisition portion (31) is determined to be greater than the upper limit value set by the fifth setting portion (31), and
a fourth notification control portion (31) adapted to perform notification of an abnormality of the machining load, when the machining load acquired by the first load acquisition portion (31) is determined to be lower than the lower limit value set by the sixth setting portion (31).

13. The numerical control device (30) according to either one of claims 1 and 3, further comprising:

a fifth setting portion (31) adapted to set an upper limit value being an upper limit of the machining load, wherein
the monitoring portion (31) includes

a third notification control portion (31) adapted to perform notification of an abnormality of the machining load, when the machining load acquired by the first load acquisition portion (31) is determined to be greater than the upper limit value set by the fifth setting portion (31).

14. The numerical control device (30) according to either one of claims 1 and 3, further comprising:

a sixth setting portion (31) adapted to set a lower limit value being a lower limit of the machining load, wherein

the monitoring portion (31) includes

a fourth notification control portion (31) adapted to perform notification of an abnormality of the machining load, when the machining load acquired by the first load acquisition portion (31) is determined to be lower than the lower limit value set by the sixth setting portion (31).

15. A machine tool (1) machining a workpiece using a tool, based on an NC program, the machine tool (1) comprising:

a reading portion (31) adapted to read, of commands of the NC program, a first command (341) and a second command (340), the first command (341) indicating an acquisition start timing of starting to acquire a machining load in the machining of the workpiece, and the second command (340) indicating an acquisition end timing of ending the acquisition of the machining load;
a first load acquisition portion (31) adapted to acquire the machining load over a period from the reading of the first command (341) by the reading portion (31) to the reading of the second command (340) by the reading portion (31); and
a monitoring portion (31) adapted to execute monitoring based on the machining load acquired by the first load acquisition portion (31).

16. A control method of controlling a numerical control device (30) adapted to control a machine tool (1) that machines a workpiece using a tool, based on an NC program, the control method comprising:

a reading processing (31) of reading, of commands of the NC program, a first command (341) and a second command (340), the first command (341) indicating an acquisition start timing of starting to acquire a machining load in the machining of the workpiece, and the second command (340) indicating an acquisition end timing of ending the acquisition of the machining load;
a first load acquisition processing (31) of acquiring the machining load over a period from the reading of the first command (341) by the reading processing (31) to the reading of the second command (340) by the reading processing (31); and
a monitoring processing (31) of executing monitoring based on the machining load acquired by the first load acquisition processing (31).

17. A program to be executed by a computer (31) of a numerical control device (30) adapted to control a machine tool (1) machining a workpiece using a tool based on an NC program, the program, when executed by the computer, causing the numerical control device to perform processes comprising:

a reading processing of reading, of commands of the NC program, a first command (341) and a second command (340), the first command indicating an acquisition start timing of starting to acquire a machining load in the machining of the workpiece, and the second command (340) indicating an acquisition end timing of ending the acquisition of the machining load;
a first load acquisition processing of acquiring the machining load over a period from the reading of the first command (341) by the reading processing (31) to the reading of the second command (340) by the reading processing (31); and
a monitoring processing of executing monitoring based on the machining load acquired by the first load acquisition processing.

18. A storage medium storing a program to be executed by a computer (31) of a numerical control device (30) adapted to control a machine tool (1) machining a workpiece using a tool based on an NC program, the program, when executed by the computer, cause the numerical control device to perform processes comprising:

a reading processing of reading, of commands of the NC program, a first command (341) and a second command (340), the first command (341) indicating an acquisition start timing of starting to acquire a machining load in the machining of the workpiece, and the second command (340) indicating an acquisition end timing of ending the acquisition of the machining load;
a first load acquisition processing of acquiring the machining load over a period from the reading of the first command (341) by the reading processing (31) to the reading of the second command (340) by the reading processing (31); and
a monitoring processing of executing monitoring based on the machining load acquired by the first load acquisition processing.

# FIG. 1

# FIG. 2

DISPLAY PORTION 15

OPERATION PORTION 24

INTERFACE 34

CPU 31

ROM 32

RAM 33

STORAGE DEVICE 29

DISTURBANCE ESTIMATION PORTION 25

TIMER 23

INTERFACE 35

DRIVE CIRCUIT 201

X-AXIS MOTOR 51

ENCODER 51a

DRIVE CIRCUIT 202

Y-AXIS MOTOR 52

ENCODER 52a

DRIVE CIRCUIT 203

Z-AXIS MOTOR 53

ENCODER 53a

DRIVE CIRCUIT 204

DRIVE SHAFT MOTOR 54

ENCODER 54a

13

30

EP 4 579 362 A1

# FIG. 3

```
┌─────────────────────────────────┐
│    SAMPLE MACHINING PROCESSING   │
└─────────────────────────────────┘
                 │
                 ▼
┌─────────────────────────────────┐
│    EXECUTE MACHINING OF WORKPIECE│─── S1
└─────────────────────────────────┘
                 │
                 ▼
┌─────────────────────────────────┐
│    ACQUIRE REFERENCE MACHINING LOAD│─── S3
└─────────────────────────────────┘
                 │
                 ▼
┌─────────────────────────────────┐
│    DISPLAY REFERENCE MACHINING LOAD│─── S5
└─────────────────────────────────┘
                 │
                 ▼
┌─────────────────────────────────┐
│    STORE REFERENCE MACHINING LOAD│─── S7
└─────────────────────────────────┘
                 │
                 ▼
┌─────────────────────────────────┐
│    EXECUTE MACHINING OF WORKPIECE│─── S9
└─────────────────────────────────┘
                 │
                 ▼
┌─────────────────────────────────┐
│    ACQUIRE MACHINING LOAD        │─── S11
└─────────────────────────────────┘
                 │
                 ▼
┌─────────────────────────────────┐
│    DISPLAY MACHINING LOAD        │─── S13
└─────────────────────────────────┘
                 │
                 ▼
┌─────────────────────────────────┐
│    SET TIME CONSTANT             │─── S15
└─────────────────────────────────┘
                 │
                 ▼
┌─────────────────────────────────┐
│    SET MONITORING START TIMING   │─── S17
└─────────────────────────────────┘
                 │
                 ▼
┌─────────────────────────────────┐
│    SET MONITORING END TIMING     │─── S19
└─────────────────────────────────┘
                 │
                 ▼
```

S21

ABSOLUTE MONITORING MODE? — NO

YES

S23 SET UPPER LIMIT VALUE

S25 SET LOWER LIMIT VALUE

S27 SET UPPER LIMIT MACHINING LOAD

S29 SET LOWER LIMIT MACHINING LOAD

END

# FIG. 4

```
EXAMPLE OF MACHINING:
G90 G00 Z200.M03 S3000

M341
```
--------------------------------------- START ACQUIRING MACHINING LOAD
```
G01 Z100.F1000
G01 Z150.F200
M340
```
--------------------------------------- END ACQUIRING MACHINING LOAD
```
G00 Z200.

M30
```

# FIG. 5

MACHINING LOAD MONITORING
(WAVEFORM MONITORING)                    2023/12/27 13:58:25

No. 0001                                                          —15

TIME CONSTANT [ 1000 ]

Fmax [ 9.1 ]
Fmin [ 7.0 ]

500.00msec

MEASUREMENT POINT

| | LATEST WAVEFORM | MONITORING START TIME | 1000 |
| | REFERENCE WAVEFORM | MONITORING END TIME | 2000 |
| | | DETERMINATION METHOD | ABSOLUTE | RELATIVE |

DATE:2021/02/25 13:56:23        COMMENT:CAPT

| RETURN | SET AS REFERENCE | | | ZOOM | | | |

| POSITION | PROGRAM | ATC TOOL | PRODUCTION MONITOR | DATA BANK | ALARM | DRAWING | HELP | ▶ |

# FIG. 6

```
EXAMPLE OF MACHINING:
G90 G00 Z200. M03 S3000

M341
------------------------------------- START ACQUIRING MACHINING LOAD
G84 Z100. R150. F6000 S6000

M340
------------------------------------- END ACQUIRING MACHINING LOAD
G00 Z200.

M30
```

# FIG. 7

MACHINING LOAD MONITORING
(WAVEFORM MONITORING)                    2023/12/27 13:58:25

No. 0001

TIME CONSTANT  [ 100 ]

MEASUREMENT POINT

☐ LATEST WAVEFORM       MONITORING START TIME [ 1000 ]

                         MONITORING END TIME   [ 2000 ]

☐ REFERENCE WAVEFORM    DETERMINATION METHOD  [ ABSOLUTE ] [ RELATIVE ]

DATE:2021/02/25 13:56:23        COMMENT:CAPT

| RETURN | SET AS REFERENCE | | | ZOOM | | | |
| POSITION | PROGRAM | ATC TOOL | PRODUCTION MONITOR | DATA BANK | ALARM | DRAWING | HELP | ▶ |

# FIG. 8

```
                    ( MAIN PROCESSING )
                            │
                            ▼
              ┌─────────────────────────┐
              │     READ ONE BLOCK      │─── S101
              └─────────────────────────┘
                            │
                            ▼
                    ◇ M341? ◇──── S103 ──── YES ──────┐
                            │                          │
                           NO                          ▼
                            │          S105   ┌──────────────────────────┐
                            ▼                 │  SET MONITORING MODE ON   │── S111
                    ◇ M340? ◇──── YES ──┐     └──────────────────────────┘
                            │           │                  │
                           NO ── S107   │                  │
                            ▼           ▼                  │
              ┌─────────────────────┐  ┌──────────────────────────┐
              │ EXECUTE COMMAND FOR │  │  SET MONITORING MODE OFF  │── S109
              │      ONE BLOCK      │  └──────────────────────────┘
              └─────────────────────┘           │
                            │                    │      ┌──────────────┐
                            │                    │      │ INITIALIZE TIME │── S113
                            │                    │      └──────────────┘
                            │                    │              │
                            ▼◄───────────────────┴──────────────┘
                    ◇ IS MONITORING MODE ON? ◇──── S115
           NO ◄─────┤         │
                    │        YES ── S117
                    │         ▼
                    │ ◇ ABSOLUTE MONITORING MODE? ◇──── NO ───┐
                    │         │                               │
                    │        YES                    ┌──────────────────────────────┐
                    │         │                     │ RELATIVE MONITORING PROCESSING │── S125
                    │ ┌─────────────────────────┐   └──────────────────────────────┘
                    │ │ ABSOLUTE MONITORING     │── S123       │
                    │ │      PROCESSING         │              │
                    │ └─────────────────────────┘              │
                    │         │◄───────────────────────────────┘
                    │         ▼
                    │ ◇ HAS MACHINE TOOL BEEN STOPPED? ◇──── YES ───┐
                    │         │                                      │
                    │        NO                                      │
                    │         ▼◄────────────────────────────────────┘
                    │ ◇ M30? ◇──── S129
          NO ───────┤   │
     ┌──────────────┐  YES
     │ INCREMENT TIME │── S131 │
     └──────────────┘         ▼
                    ┌─────────────────────────┐
                    │  DISPLAY MACHINING LOAD │── S133
                    └─────────────────────────┘
                                │
                                ▼
                            ( END )
```

# FIG. 9

```
ABSOLUTE MONITORING PROCESSING

         │
         ▼
ACQUIRING MACHINING LOAD ──── S201
         │
         ▼
EXECUTE LPF PROCESSING ──── S203
         │
         ▼
       ts<t?  ──── S205 ──── YES ──────────────┐
         │                                      │
         NO                                     ▼
         │              NO                   t<te?  ──── S207
         │     ◄──────────────────────────────
         │                                      │
         │                                      YES
         │                                      │
         │                                      ▼
         │              NO                   Fmax<F?  ──── S209
         │     ┌──────────────────────────────
         │     │                                │
         │     ▼                                YES
         │   NO                                 │
         │ ◄──── F<Fmin?  ──── S211             ▼
         │          │              ISSUE ALARM NOTIFICATION ──── S213
         │          YES                         │
         │          │                           │
         │          ▼                           │
         │   ISSUE ALARM NOTIFICATION ──── S215 │
         │          │                           │
         │          └──────────────────────────►│
         │                                      ▼
         │                            STOP MACHINE TOOL ──── S217
         │                                      │
         │◄─────────────────────────────────────
         ▼
      RETURN
```

# FIG. 10

RELATIVE MONITORING PROCESSING

ACQUIRE MACHINING LOAD — S301

ACQUIRE REFERENCE MACHINING LOAD — S303

EXECUTE LPF PROCESSING — S305

ACQUIRE INCLINATION — S307

CORRECT UPPER LIMIT MACHINING LOAD — S309

CORRECT LOWER LIMIT MACHINING LOAD — S310

SET UPPER LIMIT LOAD — S311

SET LOWER LIMIT LOAD — S313

S315
$ts < t$? — YES
NO

S317
$t < te$? — NO
YES

S319
$Fh < F$? — NO
YES

S321
$F < Fl$? — NO
YES

S323
ISSUE ALARM NOTIFICATION

S325
ISSUE ALARM NOTIFICATION

S327
STOP MACHINE TOOL

RETURN

# FIG. 11

# FIG. 12

ANTE-CORRECTION

# FIG. 13

POST-CORRECTION

Europäisches
Patentamt

European
Patent Office

Office européen
des brevets

# EUROPEAN SEARCH REPORT

**Application Number**

EP 24 22 2926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/190155 A1 (FUJI CORP [JP]) 15 September 2022 (2022-09-15) | 1-7,9-18 | INV. G05B19/18 |
| Y | * the whole document * | 8 | G05B19/406 |
| Y | US 2023/176546 A1 (KUMAZAKI SHINYA [JP] ET AL) 8 June 2023 (2023-06-08) | 8 | ADD. G05B19/4065 |
| A | * paragraph [0032] - paragraph [0047] * * paragraph [0079] - paragraph [0104] * * figures 4,5,8-13 * | 1-7,9, 11-18 | |
| A | US 2020/233396 A1 (KUROKAMI NOBORU [JP] ET AL) 23 July 2020 (2020-07-23) * the whole document * | 1,2,8, 10-18 | |

TECHNICAL FIELDS
SEARCHED (IPC)

G05B

The present search report has been drawn up for all claims

| Place of search | Date of completion of the search | Examiner |
|---|---|---|
| The Hague | 15 May 2025 | Zake, Zane |

EPO FORM 1503 03.82 (P04C01)

## ANNEX TO THE EUROPEAN SEARCH REPORT
## ON EUROPEAN PATENT APPLICATION NO.

EP 24 22 2926

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | Publication date | Patent family member(s) | Publication date |
|---|---|---|---|
| WO 2022190155 A1 | 15-09-2022 | JP WO2022190155 A1 | 15-09-2022 |
| | | WO 2022190155 A1 | 15-09-2022 |
| US 2023176546 A1 | 08-06-2023 | JP 7393545 B2 | 06-12-2023 |
| | | JP WO2021245717 A1 | 09-12-2021 |
| | | US 2023176546 A1 | 08-06-2023 |
| | | WO 2021245717 A1 | 09-12-2021 |
| US 2020233396 A1 | 23-07-2020 | CN 111451839 A | 28-07-2020 |
| | | DE 102020200491 A1 | 23-07-2020 |
| | | JP 7277152 B2 | 18-05-2023 |
| | | JP 2020116666 A | 06-08-2020 |
| | | US 2020233396 A1 | 23-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021064128 A